Europäisches Patentamt

European Patent Office

Office européen des brevets

(19)

(11) Publication number: **0 384 649**
**A2**

# EUROPEAN PATENT APPLICATION

(21) Application number: **90301632.7**

(22) Date of filing: **15.02.90**

(51) Int. Cl.⁵: **G01D 5/26**

(30) Priority: **21.02.89 US 313262**

(43) Date of publication of application:
**29.08.90 Bulletin 90/35**

(84) Designated Contracting States:
**DE FR GB IT NL SE**

(71) Applicant: **SIMMONDS PRECISION PRODUCTS INC.**
**1313 N Market Street Hercules Plaza**
**Wilmington Delaware 19894(US)**

(72) Inventor: **Robinson, Roy**
**4 Newnham Park, Hook**
**Basingstoke, Hampshire, RG 27 9QL(GB)**
Inventor: **Wheeler, Richard Gregory**
**4 Galston Drive**
**Robbinsville, New Jersey(US)**

(74) Representative: **Foster, David Martyn et al**
**MATHISEN MACARA & CO. The Coach House 6-8 Swakeleys Road**
**Ickenham Uxbridge UB10 8BZ(GB)**

(54) **Optical fibre mounting arrangements and methods.**

(57) An optical fibre mounting device and method of installation and monitoring of a structure using the device are described. The device includes an optical fibre (12) connected to a support sheet (14). The support sheet is a fabric and is readily adapted to be connected to a structure (15). The method of installation of the device includes affixing the support sheet to the structure (15). The structure is then monitored by propagating light through the installed optical fibre (12) and continuously monitoring the light to detect changes in temperature, pressure, stress and/or strain and the like in the structure.

Fig.1.

## OPTICAL FIBRE MOUNTING ARRANGEMENTS AND METHODS

The invention relates to devices and methods for mounting optical fibres on structures. Embodiments of the invention enable those structures to be monitored using the optical fibres. In one embodiment, a mounting device is provided which includes an optical fibre connected to a support sheet. The device is mounted on a structure and the structure is monitored by monitoring changes in light as it passes through the optical fibre in the mounted device.

Brennan, in U.S. Patent Application Serial Number 154,767 filed February 11, 1988 (the disclosure of which is incorporated herein by reference in its entirety), discloses optical fibres attached to and embedded in structures, such as aircraft. Griffiths in U.S. Patent 4,654,520 discloses the use of optical fibres to monitor structures and is incorporated herein by reference in its entirety.

Lott, et al. in U.S. Patent 2,787,570 and Dildilian in U.S. Patent 2,523,865 both disclose fabric having structual glass thread reinforcements. Lott et al. present a reinforcement sheet in which glass fibres are interwoven with a base fabric or laid against and bonded to the base fabric. Dildilian discloses a woven carpet joining tape in which fibre glass weft threads provide increased strength. In Lott et al. and Dildilian, the glass fibres are not used to effect light transmission. Courtney-Pratt in U.S. Patent 3,321,658 discloses a light guide plate. This light guide does not function as a sensor, and the face plate product is not used in fabricating a composite structure.

Taylor in U.S. Patent 4,630,887; Conrad et al. in U.S. Patent 4,355,865; Bridge in U.S. Patent 4,307,386; Stiles in U.S. Patent 4,239,335; Olszewski et al in U.S. Patent 4,138,193; and Carter in U.S. Patent 3,599,679 each disclose optical fibre cable structures.

According to the invention, there is provided an optical fibre mounting arrangement, comprising an optical fibre and a supporting device for the optical fibre characterised in that the supporting device is a fabric in which the optical fibre is incorporated.

According to the invention, there is further provided a method of mounting an optical fibre, characterised by the step of incorporating the optical fibre into a fabric.

The prior art does not show a sensing optical fibre woven into or laminated between composite structural fibre matrixes to provide a device which may be attached and/or embedded in composite structures during fabrication, and then used to monitor the temperature, pressure, stress and/or strain in the structure.

Optical fibre mounting arrangements and methods according to the invention will now be described, by way of example only, with reference to the accompanying drawings in which:-

Figure 1 shows a schematic representation of one of the arrangements incorporated in a monitoring system;

Figure 1A shows a schematic representation of another of the arrangements incorporated in a monitoring system adapted for optical time domain reflectometry;

Figure 2 shows a perspective view of a roll of fabric supporting an optical fibre in accordance with the invention; and

Figure 3 shows a top view of a sheet cut off the roll of Fig. 2 and with the optical fibre thereof carrying connectors.

In a preferred embodiment of the invention to be described, an optical fibre is attached to a fabric which is readily adapted to be affixed on or into a structure. The optical fibre can be used in a monitoring system which incorporates one or more optical fibres. The optical fibre may be embedded in the weave of a fabric of structural fibres to form the mounting device which may be used in fabricating composite structures.

In another preferred embodiment, the optical fibre device is directly incorporated into the weave of composite fabric (i.e., as a weft or warp thread). In a further embodiment of the invention, the optical fibre is laminated between two fabric sheets. The optical fibre-containing fabric can be used during the fabrication of composite structures so as to provide a finished structure having sensing optical fibres affixed to or embedded therein. Such structures as aircraft wings and rocket casings are readily monitored for temperature, pressure, strain and/or stress changes by connecting an optical fibre thereto.

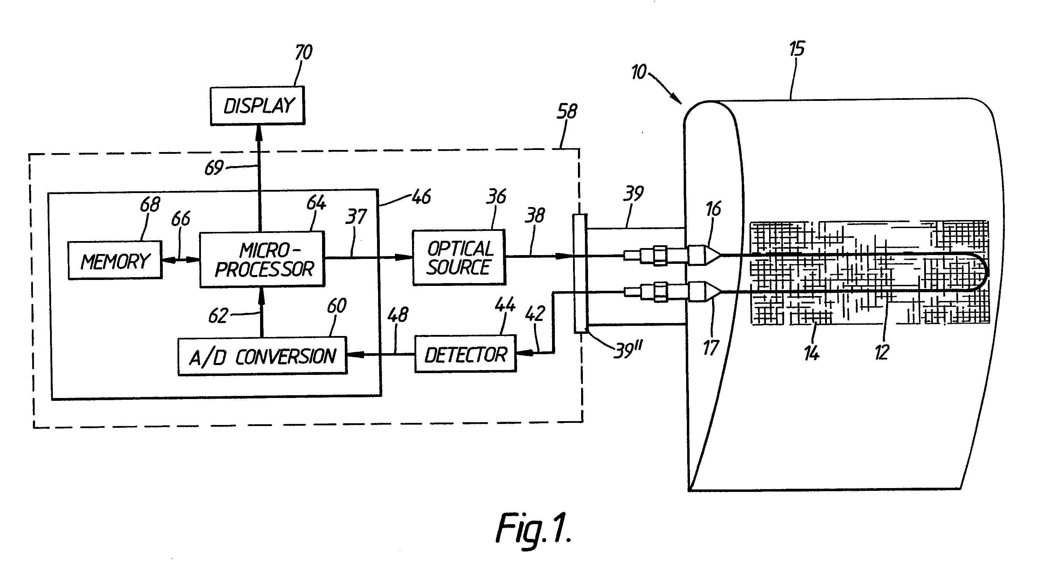

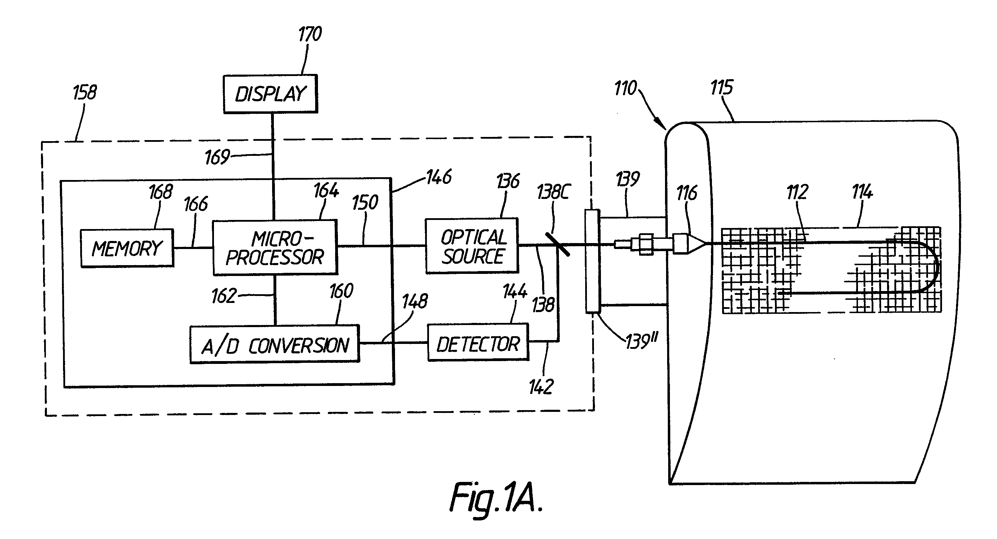

Referring more specifically to the drawings, the optical monitoring system 10 of Figure 1 is electrically passive and includes an optical fibre 12 which is supported by sheet 14 which is connected to aircraft wing 15. Optical fibre 12 is connected to connectors 16 and 17.

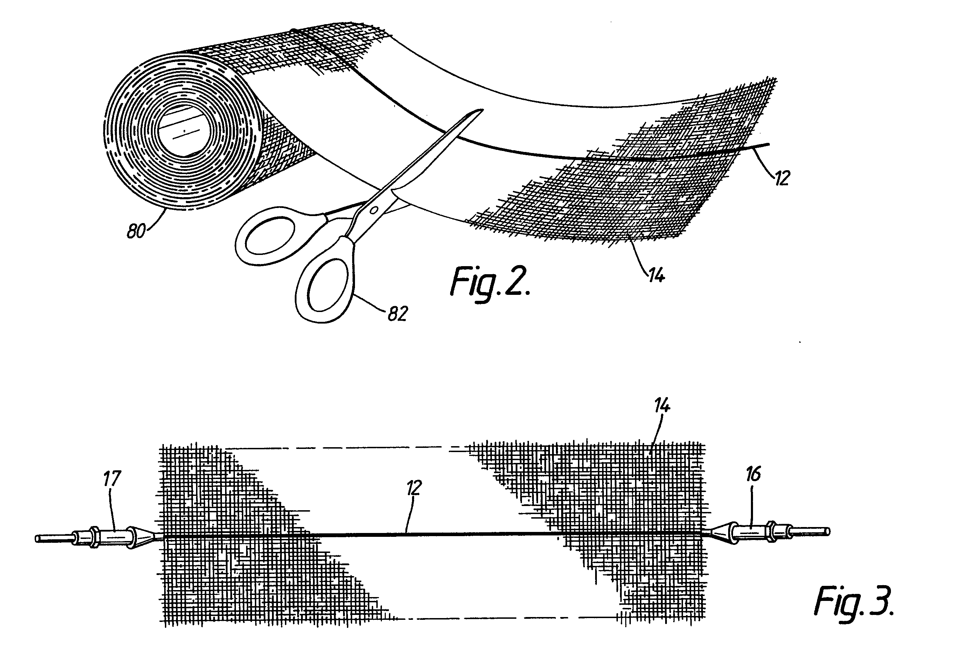

The optical fibre mounting system and the method of installation thereof are useful for monitoring structures, such as wing 15, for stress, strain, etc. The supporting sheet 14 is preferably a structural fibre fabric in which the structural fibres are preferably graphite or glass. As shown in Figure 2, the optical fibre 12 and sheet 14 are readily stored in a roll, which is easily unwound and cut to the length desired to be affixed to the structure. As shown in Figure 3, connectors 16 and 17 are affixed to the ends of the cut length of optical fibre 12 and sheet 14 for connection to light source and detection system. The sheet 14 is preferably combined with resin and/or adhesive to adhere to or form part of the structure.

Optical fibres useful in embodiments of the invention are characterized by attenuation or loss of light intensity of less than 100 dB per kilometre of optical fibre length as the light is propagated therethrough. The optical fibres include a cladding and a core having different indexes of refraction. Preferred optical fibres include a glass or plastic core. Optical fibres are adapted to guide coherent light without significant changes in the properties of the light due to the optical fibre in the absence of variations in its surroundings such as changes in temperature, pressure stress, strain, etc.

Structural fibres useful in embodiments of the invention add substantial strength to composite structures. Such structural fibres may, for example, include structural glass fibres which are characterized by attenuation or loss of light intensity by 50 percent in 3 cm (or greater than 150 dB per kilometre) of structural glass fibre length for light propagated therethrough. Structural glass fibres are not composed of cores clad with transparent material.

With more particular reference to Figure 2, the optical fibre 12 and the sheet 14 connected thereto are shown being unrolled from roll 80, and then cut to the desired length using scissors 82. As shown in Figure 3, connectors 16 and 17 are then attached to the optical fibre 12. The optical fibre 12 is then fabricated onto a structure, such as wing 15 as shown in Figure 1.

The fabricated structure is monitored by propagating light through the installed optical fibre and continuously monitoring the light to detect changes in temperature, pressure, stress and/or strain in the structure.

As shown in Figure 1, the optical source 36 transmits electromagnetic radiation, such as light, through optical fibre 38 to fibre connector 16. Connector 16 connects fibres 12 and 38. Fibre 12 is connected via connector 17 to fibre 42. The fibres 12,38 and 42 may be single mode or multimode. The optical fibres 38 and 42 extend through connector 39" and are protected by shielding 39. The optical fibre 42 channels light to optical detector 44. Optical detector 44 is connected to signal conditioning electronics 46 by electrical conductor 48. Signal conditioning electronics 46 is connected by electrical conductor 37 to optical source 36. Optical signal conditioner 58 includes source 36, detector 44 and signal conditioning electronics 46. Signal conditioning electronics 46 includes analog to digital (A/D) converter 60 which is connected by electrical conductor 48 to detector 44, and by electrical conductor 62 to microprocessor 64. Microprocessor 64 sends signals to and receives signals from memory 68 through electrical conductor 66, and is connected to display 70 by electrical conductor 69. The detector 44 is a means for detecting and indicating changes in the light signal provided by the optical source 36. The detector 44 detects the electromagnetic radiation propagating through optical fibres 12 and 42. The signal from detector 44 is converted to digital form in A/D converter 60 and fed into the microprocessor 64. Signals from the microprocessor 64 are displayed by display 70. Any type of physical movement of the optical fibre 12, such as slight bending, will have an effect upon at least one property of light propagated through the fibre. Changes in properties of the light result from the physical movement of the structure which moves the optical fibre 12.

With more particular reference to Figure 1A, an optical time domain reflectometry monitoring system 110 is shown. System 110 is useful for detecting the magnitude and/or location of stress and/or strain in a structure, such as wing 115. The electrically passive optical monitoring system 110 includes an optical fibre 112 which is supported by sheet 114 which is connected to wing 115.

The optical source 136 transmits electromagnetic radiation, such as light, through optical fibre 138 to fibre connector 116. Connector 116 connects fibres 112 and 138. The fibres 138 and 112 may be single mode or multimode. The optical fibre 138 extends through connector 139" and is protected by shielding 139. An optical fibre 142 channels the light from coupler 138C to optical detector 144. Optical detector 144 is connected to signal conditioning electronics 146 by electrical conductor 148. Signal conditioning electronics 146 is connected by electrical conductor 150 to optical source 136. Optical signal conditioner 158 includes source 136, detector 144 and signal conditioning electronics 146. Signal conditioning electronics 146 includes analog to digital (A/D) converter 160 which is connected by electrical conductor 148 to detector 144, and by electrical conductor 162 to microprocessor 164. Microprocessor 164 sends signals to and receives signals from memory 168 through electrical conductor 166, and is connected to display 170 by electrical conductor 169. The detector 144 converts light from fibre 142 into a corresponding electrical signal. Changes in the properties of the light signal as it is propagated through the fibre 112 are caused by stress and strain in the wing 115. The detector 144 detects the light propagating through optical fibre 142. Variations in the intensity of the light reflected from fibre 112 are monitored by monitoring the corresponding electrical signal from detector 144. The location and magnitude of stress and strain are determined in microprocessor 164.

Support sheets may be made of fibres and/or films. The support sheet may include an adhesive coating on at least one side thereof. The support sheet may include a release coating on at least one side thereof. In a preferred embodiment of the invention, the adhesive coating is on the opposite side of the sheet from the release coating. However, a release coated sheet may be positioned over the adhesive coating to prevent adhesion of the adhesive coating to the side of the sheet without an adhesive coating while the sheet is stored in a roll and during handling prior to installation of the sheet into or on the structure. The fibrous support sheet is preferably woven.

Structures to be monitored may be made of metal sheeting, polymeric, (organic or inorganic) composite or other suitable material. Preferred organic polymeric materials include thermoplastic and thermoset polymers. These materials may include a matrix of metal, for example aluminium, thermoplastic such as polyetherether ketone (PEEK), thermoset polymer or ceramic. A preferred composite structure includes high strength filaments or fibres in a polymeric matrix such as a crosslinked epoxy or maleinide.

The support sheet and optical fibre supported thereby are preferably incorporated into composite structures during fabrication. Composite structures are fabricated by forming a mixture of structural fibres and resin (prepreg). The resin is preferably adapted to form a thermoplastic or a thermoset polymer which encloses the structural fibres and supports the sheet which supports the optical fibre. The polymer and structural fibres form the shape of a desired structure such as a wing or a missile casing.

Epoxy resins are well established for use in making high performance composite structures which include high strength fibre. Preferred fibre materials are metal, glass, boron, carbon, graphite, (continuous or chopped filaments) or the like, such as disclosed by Chu et al in the U.S. Patent No. 4,677,305. Structures made of these composites can weigh considerably less than their metal counterparts of equivalent strength and stiffness.

The structures may be fabricated as taught by Gill et al (assigned to Hercules Incorporated) in U.S. Patent 4,581,086. Helical applicators may be used to deposit a ply or plies of continuous structural filaments into the form of the structure as taught by Gill et al in U.S. Patent 4,519,869 (Assignee, Hercules Incorporated). Alternatively, multiphase epoxy thermosets having rubber within a disperse phase may be used to make structures, as taught by Bard in U.S. Patent 4,680,076 (assigned to Hercules Incorporated). Optical fibres attached to the structural fabric may be embedded in or attached to these structures during fabrication.

Attachment to the structures of the optical fibres after construction may be carried out using the same or a different matrix material than is used to fabricate the underlying structures.

Other matrix compositions which may be used to make structures include poly(arylacetylene) as disclosed by Jabloner in U.S. Patents 4,070,333; and 4,097,460; and French in U.S. Patent 4,144,218 (each assigned to Hercules Incorporated). Chu, et al. in U.S. Patent Number 4,656,208 (assigned to Hercules Incorporated) discloses thermosetting epoxy resin compositions and thermosets therefrom.

The changes in the intensity of the light transmitted through fibre 38 may be monitored by signal conditioning electronics 46 (Fig. 1) or 146 (Fig. 1A). Instead, the changes in the polarization state of the transmitted light can be monitored by signal conditioning electronics 46 (Fig. 1) or 146 (Fig. 1A). Alternatively another possibility is to use interferometrics to monitor the transmitted light.

## Claims

1. An optical fibre mounting arrangement, comprising an optical fibre (12,112) and a supporting device (14,114) for the optical fibre (12,112) characterised in that the supporting device (14,114) is a fabric in which the optical fibre (12,112) is incorporated.

2. An arrangement according to claim 1, characterised in that the optical fibre (12,112) is woven into the fabric (14,114).

3. An arrangement according to claim 1, characterised in that the optical fibre (12,112) is laminated between two sheets of the fabric (14,114).

4. An arrangement according to any preceding claim, characterised in that the fabric (14,114) comprises structural fibres.

5. An arrangement according to claim 4, characterised in that the structural fibres are glass or graphite fibres.

6. An arrangement according to any preceding claim, characterised in that it is wound in a roll (Figure 2) whereby to permit it to be unrolled and cut off to length.

7. An arrangement according to any preceding claim, characterised in that the fabric (14,114) has an adhesive coating on a face thereof.

8. An arrangement according to any preceding claim, characterised in that the fabric (14,114) has a release coating on a face thereof.

9. An arrangement according to any preceding claim, characterised in that the fabric (14,114) is supported by a structure (15,115) changes in a characteristic of which are to be monitored by monitoring the effect of such changes on light propagated through the optical fibre (12,112).

10. An arrangement according to claim 9, characterised in that the said structure (15,115) is a composite structure and in that the fabric (14,114), with the optical fibre (12,112), is incorporated into the composite structure (15,115) during the latter's manufacture.

11. An arrangement according to claim 9 or 10, characterised in that the structure (15,115) is or is part of an aircraft.

12. An arrangement according to any one of claims 9 to 11, characterised by a device (36,136) for transmitting light into the optical fibre (12,112), an optical detector (44,144) connected to monitor the light emanating from the optical fibre (12,112), and a processing device (46,146) responsive to the optical detector (44,144) for detecting the said changes in the characteristic.

13. A method of mounting an optical fibre (12,112), characterised by the step of incorporating the optical fibre (12,112) into a fabric (14,114).

14. A method according to claim 13, characterised in that the optical fibre (12,112) is woven into the fabric (14,114).

15. A method according to claim 13, characterised in that the optical fibre (12,112) is laminated into the fabric (14,114).

16. A method according to any one of claims 13 to 15, characterised in that the fabric (14,114) incorporating the optical fibre (12,112) is wound into a roll (80) and subsequently at least partially unwound therefrom and cut off to length.

17. A method according to any one of claims 13 to 16, characterised by the step of connecting the fabric (14,114), with the optical fibre (12,112) incorporated therein, to a structure (15,115).

18. A method according to claim 17, characterised in that the step of connecting the fabric (14,114) to the structure (15,115) is an adhesive step.

19. A method according to claim 17 or 18, characterised by the step of monitoring a change in the characteristic of the structure (15,115) by monitoring corresponding changes in light propagated along the optical fibre (12,112).

20. A method according to any one of claims 17 to 19, in which the structure (15,115) is a composite structure, characterised by the step of connecting the fabric (14,114), with the optical fibre (12,112) incorporated therein, to the structure (15,115) by fabricating the fabric (14,114) into the composite structure during the latter's manufacture.

21. A method according to any one of claims 13 to 20, characterised by the step of applying a release coating to the fabric (14,114).

Fig.1.

EP 0 384 649 A2

Fig.1A.

EP 0 384 649 A2

Fig.2.

Fig.3.

EP 0 384 649 A2